# FASCICULE DE BREVET EUROPEEN

(11) **EP 3 674 117 B1**
(45) Date de publication et mention de la délivrance du brevet: **08.02.2023**
(21) Numéro de dépôt: 19218333.3
(22) Date de dépôt: 19.12.2019
(51) Int. Cl.: B60J 5/10

(54) **HAYON A DOUBLURE STRUCTURELLE AVEC MOYENS DE FIXATION DEPORTES**
HECKTÜR MIT STRUKTURVERKLEIDUNG MIT VERSETZTEN BEFESTIGUNGSMITTELN
TAILGATE WITH STRUCTURAL INNER PANEL WITH OFFSET ATTACHMENT MEANS

(30) Priorité: 27.12.2018 FR 1874266
(43) Date de publication de la demande: 01.07.2020
(73) Titulaire: Compagnie Plastic Omnium, 69007 Lyon (FR)
(72) Inventeur: HUMMER, Emilien, 01150 SAINTE-JULIE (FR); LETERRIER, Franck, 01150 SAINTE-JULIE (FR)
(74) Mandataire: LLR

(56) Documents cités:
- EP-A1- 3 107 745
- FR-A1- 2 672 017
- JP-A- S6 042 121

## Description

L'invention concerne les hayons de véhicule automobile.

Habituellement, les hayons de véhicule automobile comportent une pièce structurelle, généralement appelée doublure, qui est située entre une peau externe destinée à constituer la face externe visible de la pièce de carrosserie, et une garniture, qui est une pièce d'habillage intérieur qui couvre en général totalement les parties inesthétiques de la doublure structurelle qui seraient autrement visibles depuis l'intérieur du véhicule. Souvent, cette garniture rapportée couvre particulièrement une partie basse de la doublure structurelle, située en dessous de la lunette arrière du hayon Cette garniture participe donc à la qualité perçue par l'utilisateur, elle doit donc être d'aspect soigné.

Généralement, le hayon intègre sur la face de la doublure côté habitacle et en dessous de la lunette arrière un ensemble d'équipements techniques tels qu'un moteur d'assistance à la fermeture du hayon, des faisceaux électriques, un moteur de serrure, des calculateurs. Ces éléments techniques sont généralement fixés sur la face de la doublure structurelle du hayon qui est en regard de l'habitacle du véhicule. Ainsi, ils sont situés et fixés sur la doublure, entre celle-ci et la garniture recouvrant la doublure, et donc cachés à l'intérieur du hayon.

Ce type de hayon, bien que très satisfaisant, a l'inconvénient de comporter plusieurs pièces distinctes, notamment la garniture intérieure, la doublure structurelle et la peau extérieure. Ainsi lors de l'assemblage du hayon, plusieurs étapes d'assemblage sont nécessaires, ce qui augmentent le coût de fabrication de celui-ci. On peut aussi noter que le maniement d'une garniture de grande taille est compliqué pour les opérateurs sur la ligne de production, ce qui augmente les risques de chocs pouvant détériorer le hayon lors de sa fabrication. De même, ces étapes d'assemblage nécessitent la présence d'un outillage adapté sur la ligne de production.

On connaît des documents FR 2 672 017 A1 et EP 3 107 745 A1, un hayon de véhicule automobile, qui comporte une doublure structurelle, une peau externe et un logement pour lunette arrière, un ou plusieurs moyens de fixation situés en partie basse du hayon en dessous du logement et sur une face de la doublure structurelle en regard de la peau externe du hayon.

De plus, le nombre de pièces augmente le poids du hayon, ce qui réduit les performances du véhicule et augmente sa consommation.

On souhaite donc proposer des hayons de véhicule automobile facilement assemblables, et ayant une masse réduite.

A cet effet, l'invention a pour objet un hayon de véhicule automobile selon la revendication 1. Ce hayon comporte notamment une doublure structurelle, une peau externe, un logement pour lunette arrière, et un ou plusieurs moyens de fixation situés en partie basse du hayon en dessous du logement et sur une face de la doublure structurelle en regard de la peau externe, ces moyens de fixation étant aptes à fixer des éléments techniques sur la face de la doublure structurelle en regard de la peau externe du hayon.

Les éléments techniques sont donc fixés sur la face de la doublure structurelle qui est en regard de la peau externe du hayon, au lieu d'être fixés sur la face en regard de l'habitacle comme dans les hayons de l'art antérieur. Ainsi, cette face devient apte à faire au moins en partie office de pièce d'habillage, car elle présente une face en regard de l'habitacle qui est dépourvue d'éléments techniques.

De cette façon, la fonction de la garniture est réalisée soit en partie, soit totalement par la doublure structurelle du hayon, plus précisément par sa face en regard de l'habitacle.

Ainsi, l'invention permet de diminuer la masse du hayon en supprimant totalement ou en partie la garniture, et donc d'améliorer les performances du véhicule, par exemple diminuer sa consommation en carburant. La suppression totale ou partielle de la garniture permet aussi de réduire les investissements industriels ainsi que le temps d'assemblage.

De même, il est plus aisé sur les lignes de production du hayon de manipuler une garniture de plus faible taille, ce qui diminue le temps de fabrication du hayon et les risques de détérioration de celui-ci suite à une mauvaise manipulation de la garniture.

Si la garniture est entièrement remplacée par la doublure structurelle, alors l'étape de montage de celle-ci est supprimée, ce qui rend le montage du hayon sur le véhicule plus rapide et donc moins coûteux.

Enfin, la diminution du nombre d'étapes de montage du hayon permet de limiter l'outillage spécifique nécessaire, ce qui diminue le coût du montage.

Le hayon selon l'invention peut aussi comprendre l'une ou plusieurs des caractéristiques suivantes, prises seules ou en combinaison :
- la doublure structurelle comporte une face opposée à la face, en regard de la peau externe qui est destinée à être visible depuis l'habitacle d'un véhicule lorsque le hayon est monté sur un véhicule automobile ;
- la doublure structurelle est une pièce moulée en matière plastique ;
- le hayon comporte une ouverture permettant l'accès à la face de la doublure structurelle en regard de la peau externe ;
- le hayon comporte des éléments techniques fixés sur la face de la doublure structurelle en regard de la peau externe grâce aux moyens de fixation ;
- les moyens de fixation comprennent seuls ou en combinaison : un clip, une agrafe, de la colle ou une soudure ;
- la doublure structurelle comporte une face opposée à la face en regard de la peau externe, la face opposée (24) étant lisse et dépourvue d'aspérités ;
- les éléments techniques sont sélectionnés parmi les éléments suivants : un moteur d'assistance à la fermeture du hayon, des câblages, un moteur de serrure, un calculateur.

L'invention a également pour objet un procédé d'assemblage d'un hayon tel que décrit précédemment, qui comprend les étapes de :
- fixation des éléments techniques sur la face de la doublure structurelle en regard de la peau externe du hayon à l'aide des moyens de fixation ;
- mise en position de la doublure structurelle par rapport à la peau externe ;
- fixation de la doublure structurelle (20) sur la peau externe (30) par collage, vissage et/ ou clippage.

Le procédé selon l'invention comprend une étape de fixation d'une garniture rapportée sur la doublure structurelle.

### Brève description des figures

Dans ce qui suit, les termes tels que « avant », « arrière », « au-dessus », « supérieur », « en-dessous », « inférieur », etc. s'entendent par référence à l'orientation usuelle des véhicules automobiles.

L'invention sera mieux comprise à la lecture de la description qui va suivre donnée uniquement à titre d'exemple et faite en se référant aux dessins annexés dans lesquels :
[Fig. 1] est une vue en éclaté en perspective d'un hayon selon l'invention ;
[Fig. 2] est une vue en perspective d'un hayon selon l'invention ;
[Fig. 3] est une vue de l'arrière d'un hayon de véhicule automobile ;
[Fig. 4] est une section d'un hayon de véhicule automobile de l'art antérieur selon le plan A-A de la figure 3 ;
[Fig. 5] est une section d'un hayon selon un premier mode de réalisation de l'invention selon le plan A-A de la figure 3 ;
[Fig. 6] est une vue d'une face intérieure d'une doublure de hayon selon le premier mode de réalisation de l'invention ;
[Fig. 7] est une section d'un hayon selon un deuxième mode de réalisation de l'invention selon le plan A-A de la figure 3 ;
[Fig. 8] est une vue d'une face intérieure d'une doublure de hayon selon le deuxième mode de réalisation de l'invention.

### Description détaillée

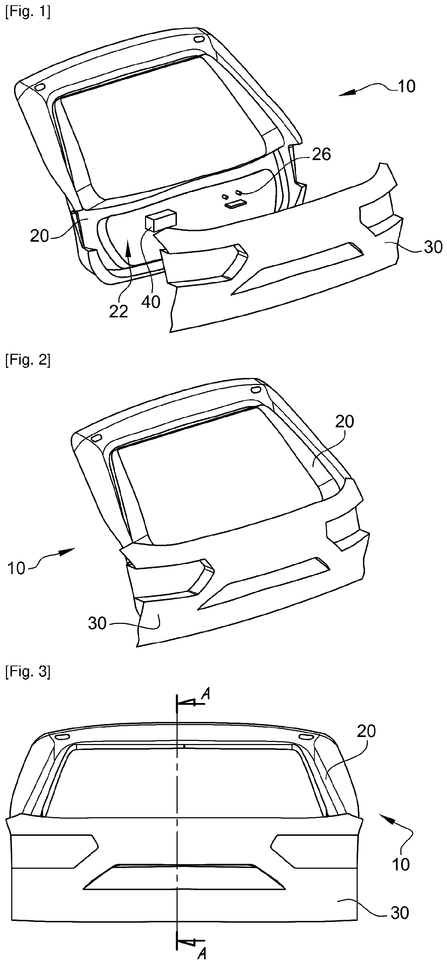

On se réfère maintenant aux figures 1, 2, 5 et 6 qui présentent un hayon 10 de véhicule automobile selon un premier mode de réalisation de l'invention, non revendiqué.

Le hayon 10 selon le premier mode de réalisation comporte une doublure structurelle 20. Par doublure structurelle on entend une doublure qui assure la tenue mécanique du hayon, et soutient les autres éléments de celui-ci qui sont fixés sur elle.

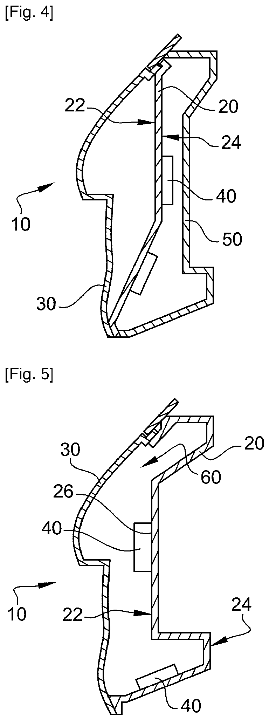

La doublure structurelle 20 comporte des zones d'interface aptes à accueillir une peau externe 30 du hayon 10, ainsi qu'une ouverture d'accueil pour une lunette arrière. Elle comporte une face 22 destinée à être en regard de la peau externe 30, qui accueille, comme nous le verrons plus loin, des moyens de fixation 26 d'éléments techniques. Dans le reste de cette description, cette face 22 en regard de la peau externe 30 pourra également être nommée face externe 22. La doublure structurelle 20 comporte également une face opposée 24 à la face 22. Dans le reste de cette description, elle pourra également être nommée face interne 24, celle-ci étant tournée vers l'intérieur du véhicule lorsque le hayon 10 est fermé. Comme on peut le voir sur la figure 5, qui est une section de la partie basse du hayon 10, la peau externe 30 et la doublure structurelle 20 forment à elles deux un compartiment 60, qui est un volume disponible vide.

La doublure 20 comporte un ou plusieurs moyens de fixation qui sont disposés sur la face 22 en regard de la peau externe 30. Ainsi, ces moyens de fixation 26 sont situés dans le compartiment 60. Ils ne sont donc pas visibles hors de ce compartiment 60. Ces moyens de fixation 26 sont aptes à fixer des éléments techniques de toute sorte sur la face 22 de la doublure structurelle 20 en regard de la peau externe 30. Ces moyens de fixation sont situés sur une partie basse de la doublure structurelle 20 qui est située en dessous d'un logement pour une lunette arrière du hayon 10.

Ainsi, la face opposée 24 est dépourvue de moyens de fixation 26, et donc d'éléments techniques 40, contrairement à ce que l'on peut voir sur le hayon de l'art antérieur de la figure 4. Sur celui-ci, les moyens de fixation 26 et les éléments techniques 40 sont fixés sur la face opposée 24 de la doublure structurelle 20. Ils doivent donc être recouverts par une garniture 50 afin qu'ils ne soient pas visibles depuis l'habitacle du véhicule sur lequel le hayon 10 est monté. Cette garniture 50 fait donc office de face d'habillage de la doublure structurelle 20.

Dans le premier mode de réalisation de l'invention, les moyens de fixation 26 sont cachés du fait qu'ils sont situés sur la face extérieure 22 de la doublure structurelle 20. Le hayon 10 ne nécessite donc pas de garniture 40 pour cacher ces moyens de fixation 26, il en est donc dépourvu. La doublure structurelle 20 fait donc office à la fois de pièce structurelle du hayon 10 et de pièce d'habillage à la place de la garniture 40 de du hayon de l'art antérieur.

Ainsi, la masse du hayon 10 est réduite du fait de la disparition de la garniture, ce qui permet d'augmenter les performances du véhicule sur lequel le hayon 10 est monté, par exemple de diminuer sa consommation.

De même, la suppression de la garniture permet aussi de supprimer une étape de montage de la garniture sur le hayon 10. Ainsi, le temps nécessaire au montage du hayon 10 sur une ligne de production est réduit, et donc le coût de fabrication de celui-ci. Enfin, la suppression de l'étape de montage de la garniture permet aussi de diminuer les risques de détérioration des différentes pièces du hayon lors de l'étape d'assemblage de la garniture.

La doublure structurelle 20 du hayon 10 est une pièce moulée en matière plastique. La face intérieure 22 de la doublure interne 20 n'étant pas ou seulement en partie recouverte par une garniture, elle est visible pour les utilisateurs du véhicule, par exemple lorsque le hayon 10 est ouvert. Ainsi, ce procédé d'obtention permet d'obtenir une doublure 20 qui a une face intérieure 24 qui possède un aspect lisse et sans formes disgracieuses, compatible avec sa visibilité pour l'utilisateur du véhicule. Cette face intérieure 22 de la doublure interne 20 est dépourvue de trous, d'aspérités, de zones techniques ou de défauts d'aspect comme des retassures par exemple, afin qu'elle ait le même aspect que celui qu'aurait une garniture. L'utilisation de la matière plastique est avantageuse également car elle permet d'obtenir une doublure structurelle 20 de faible masse tout en ayant une résistance mécanique suffisamment haute pour cette application.

La doublure structurelle 20 présente des éléments techniques 40 fixés sur sa face extérieure 22 par les moyens de fixation 26. Ainsi, ces éléments techniques 40 sont cachés dans le compartiment 60 du hayon 10.

Les moyens de fixation 26 peuvent être des agrafes, des clips, de la colle ou une soudure. Tous ces moyens de fixation sont des moyens simples, rapides à mettre en oeuvre et peu coûteux de fixation des éléments techniques 40.

Les moyens de fixation 26 peuvent également être des formes telles que des nervures, des fûts ou des bossages, qui permettent l'assemblage des différents composants via des vis ou des agrafes par exemple. Ces moyens peuvent par exemple être issus directement du moulage de la doublure structurelle 20.

Les éléments techniques 40 fixés sur la doublure structurelle 20 peuvent être un moteur d'assistance à la fermeture du hayon, des câblages, un ancrage de vérin motorisé, un moteur de serrure ou bien un calculateur par exemple.

Nous allons maintenant décrire un deuxième mode de réalisation de l'invention, qui est revendiquée. Pour celui-ci nous ne décrirons que les éléments qui diffèrent de ceux du premier mode de réalisation. Les autres sont identiques à ceux décrits dans le premier mode de réalisation.

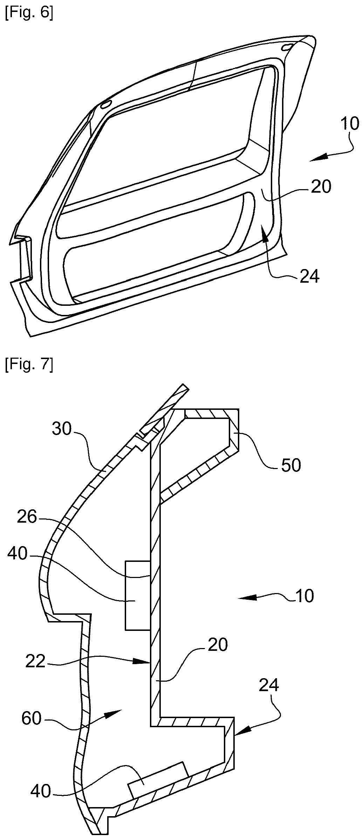

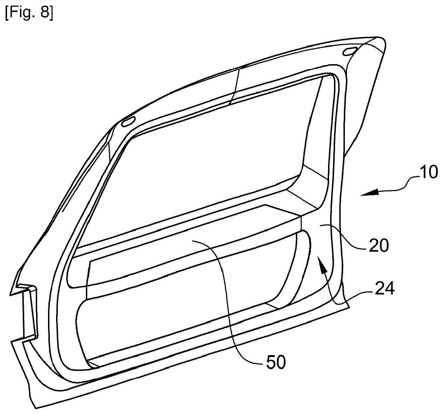

Nous décrirons ce mode de réalisation à l'appui des figures 7 et 8.

Le hayon 10 selon le second mode de réalisation de l'invention diffère du hayon 10 selon le premier mode de réalisation en ce que le hayon 10 comporte une garniture 50 rapportée. Cette garniture 50 peut être placée par exemple au sommet de la partie basse du hayon 10, située juste en dessous de la lunette arrière du hayon 10. La garniture 50 de ce mode de réalisation recouvre une zone partielle représentant une faible portion de la partie basse de la doublure structurelle 50, mais peut recouvrir une portion plus importante de cette partie basse. Le hayon 10 selon ce mode de réalisation est donc plus léger que les hayons de l'art antérieur, du fait de la diminution du poids de la garniture 50.

La garniture 50 est une pièce moulée en matière plastique et sert de pièce d'habillage sur une zone partielle de la partie basse de la face intérieure 24 de la doublure structurelle 20.

Comme dans le mode de réalisation précédent, des éléments techniques 40 sont fixés sur la face 22 en regard de la peau externe 30, de la même façon que pour le hayon 10 du premier mode de réalisation de l'invention.

La présence de la garniture rapportée 50, en couvrant la zone partielle située juste en dessous de la lunette arrière permet de s'affranchir dans cette zone des contraintes spécifiques de forme et d'aspect de la doublure structurelle 20 notamment dues à l'implantation de la lunette et aux jonctions avec les montants latéraux. Cette caractéristique permet de faciliter le démoulage de la doublure structurelle 20, afin d'éviter des contres dépouilles dans la doublure structurelle 20.

La garniture 50 couvre environ 25% de la surface de la partie basse de la doublure structurelle 20 situé sous la lunette, mais ce pourcentage peut évoluer suivant les hayons.

Ainsi, le hayon 10 suivant ce deuxième mode de réalisation de l'invention est plus léger que le hayon de l'art antérieur car la garniture 50 rapportée est bien plus petite que celle de l'art antérieur, ne couvrant qu'une surface réduite de la doublure structurelle 20.

De manière additionnelle, on peut prévoir l'intégration dans la garniture 50 d'un logement permettant le stockage d'équipements de sécurité tels qu'un gilet ou un triangle de sécurité par exemple.

De même, il présente également l'avantage d'avoir un assemblage plus facile, car la garniture à manier sur la ligne d'assemblage est plus petite et plus légère que celles connues. Ainsi, le temps et le coût d'assemblage sont réduits, de même que les risques de détérioration par chocs du hayon lors de la manipulation de la garniture 50.

On peut noter aussi que l'ouverture 28 permet un accès, après démontage de la garniture 50, aux éléments techniques 40, ce qui peut permettre de faciliter le changement d'un élément technique défectueux sans avoir à démonter tout le hayon 10.

Nous allons maintenant décrire le procédé d'assemblage du hayon 10 selon l'invention.

L'assemblage du hayon 10 se fait en une succession d'étapes que nous allons décrire ici. Nous décrirons en premier lieu les étapes communes aux deux modes de réalisation décrits précédemment.

Tout d'abord, on fixe les éléments techniques 40 sur la face 22 destinée à être en regard de la peau externe 30, à l'aide des moyens de fixation 26. Cette fixation peut avoir lieu par agrafage, soudure, collage, adhésivage, rivetage, vissage ou clipsage.

On met en position la doublure structurelle 20 par rapport à la peau externe 30. Cette mise en position peut être réalisée par exemple par la coopération de formes coniques mâles et femelles disposées sur la doublure structurelle 20 et la peau externe 30. L'utilisation des formes coniques mâles et femelles permet d'obtenir la précision dans la mise en position de la doublure structurelle 20 par rapport à la peau externe 30 nécessaire.

On fixe la doublure structurelle 20 sur la peau externe 30. Cette fixation est réalisée par collage, ou par soudage. La fixation par collage ou par soudage de la doublure structurelle 20 sur la peau externe 30 permet d'assurer une étanchéité du compartiment 60, ce qui est particulièrement avantageux pour protéger les éléments techniques 40 du milieu extérieur.

De manière alternative, cette fixation de la doublure structurelle sur la peau externe 30 peut être réalisée par vissage ou par clippage.

Pour l'assemblage du hayon 10 selon le deuxième mode de réalisation décrit dans cette demande, on ajoute également une étape de mise en position et de fixation de la garniture 50 sur la doublure structurelle 20 du hayon 10. La mise en position peut être réalisée par exemple par coopération de formes mâles et femelles coniques de la doublure structurelle 20 et de la garniture 50. La fixation de la garniture 50 sur la doublure structurelle 20 peut être réalisée par collage, soudage, ou tout autre moyen connu des spécialistes.

### Nomenclature :

10 : hayon de véhicule automobile
20 : doublure structurelle du hayon
22 : face de la doublure structurelle en regard de la peau externe ou face externe
24 : face opposée ou face interne de la doublure structurelle
25 : profondeurs de style de la face opposée de la doublure structurelle
26 : moyen de fixation de la doublure structurelle
30 : peau externe du hayon
40 : éléments techniques
50 : garniture
60 : compartiment

## Revendications

1. Hayon (10) de véhicule automobile, qui comporte une doublure structurelle (20), une peau externe (30), un logement pour lunette arrière, un ou plusieurs moyens de fixation (26) situés en partie basse du hayon (10) en dessous du logement et sur une face (22) de la doublure structurelle (20) en regard de la peau externe (30), ces moyens de fixation (26) étant aptes à fixer des éléments techniques (40) sur la face (22) de la doublure structurelle (20) en regard de la peau externe (30) du hayon (10), **caractérisé en ce qu'**il comporte une garniture (50) rapportée sur la face intérieure (24) de la doublure structurelle (20) et recouvrant une zone partielle représentant une faible portion de la partie basse de la doublure structurelle (20) située au sommet de la partie basse du hayon, juste en dessous de la lunette arrière du hayon (10).

2. Hayon 10 selon la revendication précédente dans lequel la doublure structurelle (20) comporte une face opposée (24) à la face (22), en regard de la peau externe qui est destinée à être visible depuis l'habitacle d'un véhicule lorsque le hayon (10) est monté sur un véhicule automobile.

3. Hayon (10) selon l'une des revendications précédentes dans lequel la doublure structurelle (20) est une pièce moulée en matière plastique.

4. Hayon (10) selon l'une des revendications précédentes qui comporte une ouverture (28) permettant l'accès à la face (22) de la doublure structurelle (20) en regard de la peau externe (30).

5. Hayon (10) selon l'une des revendications précédentes qui comporte des éléments techniques (40) fixés sur la face (22) de la doublure structurelle grâce aux moyens de fixation (26).

6. Hayon (10) selon l'une des revendications précédentes dans lequel les moyens de fixation (26) comprennent seuls ou en combinaison : un clip, une agrafe, de la colle ou une soudure.

7. Hayon (10) selon l'une des revendications précédentes dans lequel la doublure structurelle (20) comporte une face opposée (24) à la face en regard de la peau externe (22), la face opposée (24) étant lisse et dépourvue d'aspérités.

8. Hayon (10) selon l'une des revendications précédentes dans lequel les éléments techniques (40) sont sélectionnés parmi les éléments suivants : un moteur d'assistance à la fermeture du hayon, des câblages, un moteur de serrure, un calculateur.

9. Procédé d'assemblage d'un hayon (10) selon l'une des revendications précédentes **caractérisé en ce qu'**il comprend les étapes de :
- fixation des éléments techniques (40) sur la face (22) de la doublure structurelle (20) en regard de la peau externe (30) du hayon (10) à l'aide des moyens de fixation (26) ;
- mise en position de la doublure structurelle (20) par rapport à la peau externe (30) ;
- fixation de la doublure structurelle (20) sur la peau externe (30) par collage, vissage et/ ou clippage,
- fixation d'une garniture (50) rapportée sur la doublure structurelle (20).

## Patentansprüche

1. Heckklappe (10) eines Kraftfahrzeugs umfassend
eine strukturelle Auskleidung (20), eine Außenhaut (30), eine Aufnahme für eine Heckscheibe und ein oder mehrere Befestigungsmittel (26), die sich im unteren Teil der Heckklappe (10) unterhalb der Aufnahme und auf einer der Außenhaut (30) gegenüberliegenden Seite (22) der strukturellen Auskleidung (20) befinden, wobei diese Befestigungsmittel (26) geeignet sind, technische Elemente (40) auf der der Außenhaut (30) der Heckklappe (10) gegenüberliegenden Seite (22) der strukturellen Auskleidung (20) zu befestigen,
**dadurch gekennzeichnet, dass** sie eine Verkleidung (50) umfasst, die an der Innenseite (24) der strukturellen Auskleidung (20) angebracht ist und einen Teilbereich bedeckt, der einen kleinen Teil des unteren Teils der strukturellen Auskleidung (20) darstellt, der sich an der Oberseite des unteren Teils der Heckklappe direkt unter der Lünette der Heckklappe (10) befindet.

2. Heckklappe 10 nach dem vorhergehenden Anspruch, wobei die strukturelle Auskleidung (20) eine der Seite (22) gegenüberliegende Seite (24) aufweist, die der Außenhaut gegenüberliegt, die dazu bestimmt ist, vom Fahrgastraum eines Fahrzeugs aus sichtbar zu sein, wenn die Heckklappe (10) an einem Kraftfahrzeug angebracht ist.

3. Heckklappe (10) nach einem der vorhergehenden Ansprüche, wobei die strukturelle Auskleidung (20) ein Formteil aus Kunststoff ist.

4. Heckklappe (10) nach einem der vorhergehenden Ansprüche, aufweisend eine Öffnung (28), die den Zugang zu der der Außenhaut (30) zugewandten Seite (22) der strukturellen Auskleidung (20) ermöglicht.

5. Heckklappe (10) nach einem der vorhergehenden Ansprüche, aufweisend die technischen Elemente (40), die mit Hilfe von Befestigungsmitteln (26) an der Seite (22) des Strukturfutters befestigt sind.

6. Heckklappe (10) nach einem der vorhergehenden Ansprüche, wobei die Befestigungsmittel (26) einzeln oder in Kombination Folgendes umfassen: einen Clip, eine Klammer, Klebstoff oder eine Schweißnaht.

7. Heckklappe (10) nach einem der vorhergehenden Ansprüche, wobei die strukturelle Auskleidung (20) eine Seite (24) aufweist, die der der Außenhaut (22) zugewandten Seite gegenüberliegt, wobei die gegenüberliegende Seite (24) glatt und frei von Unebenheiten ist.

8. Heckklappe (10) nach einem der vorhergehenden Ansprüche, bei der die technischen Elemente (40) aus den folgenden Elementen ausgewählt werden: ein Motor zur Unterstützung des Schließens der Heckklappe, Verkabelungen, ein Schlossmotor, ein Rechner.

9. Verfahren zum Zusammenbau einer Heckklappe (10) nach einem der vorhergehenden Ansprüche, **dadurch gekennzeichnet, dass** es die folgenden Schritte umfasst:
- Befestigen der technischen Elemente (40) auf der Seite (22) der strukturellen Auskleidung (20), die der Außenhaut (30) der Heckklappe (10) zugewandt ist, mit Hilfe der Befestigungsmittel (26);
- Positionieren der strukturellen Auskleidung (20) in Bezug auf die Außenhaut (30);
- Befestigen der strukturellen Auskleidung (20) an der Außenhaut (30) durch Kleben, Schrauben und/oder Clippen,
- Befestigung einer Verkleidung (50), die auf die strukturelle Auskleidung (20) aufgesetzt wird.

## Claims

1. Tailgate (10) of a motor vehicle, which comprises a structural lining (20), an outer skin (30), a rear window housing, one or more means of attachment (26) located in the lower part of the tailgate (10) below the housing and on one side (22) of the structural lining (20) opposite the outer skin (30), these means of attachment (26) being capable of fixing technical elements (40) on the face (22) of the lining structural (20) in relation to the outer skin (30) of the tailgate (10),**characterized in that** it comprises a trim (50) attached to the inner face (24) of the structural lining (20) and covering a partial area representing a small portion of the lower part of the structural lining (20) located at the top of the lower part of the tailgate, just below the rear window of the tailgate (10).

2. Tailgate 10 according to the preceding claim wherein the structural lining (20) has an opposite face (24) to the face (22), opposite the outer skin which is intended to be visible from the passenger compartment of a vehicle when the tailgate (10) is mounted on a motor vehicle.

3. Tailgate (10) according to one of the preceding claims in which the structural lining (20) is a molded piece of plastic.

4. Tailgate (10) according to one of the preceding claims which has an opening (28) allowing access to the face (22) of the structural lining (20) next to the outer skin (30).

5. Tailgate (10) according to one of the preceding claims which comprises technical elements (40) fixed on the face (22) of the structural lining thanks to the means of attachment (26).

6. Tailgate (10) according to one of the preceding claims wherein the means of fixation (26) comprise alone or in combination: a clip, a staple, glue or weld.

7. Tailgate (10) according to one of the preceding claims in which the structural lining (20) has an opposite face (24) to the face opposite the outer skin (22), the opposite side (24) being smooth and devoid of roughness.

8. Tailgate (10) according to one of the preceding claims in which the technical elements (40) are selected from the following elements: a tailgate closing assistance motor, wiring, a lock motor, an ECU.

9. Method of assembling a tailgate (10) according to one of the preceding claims **characterized in that** it comprises the steps of:
- fixing of the technical elements (40) on the face (22) of the structural lining (20) in relation to the outer skin (30) of the tailgate (10) using the means of attachment (26);
- positioning of the structural lining (20) in relation to the outer skin (30);
- fixing of the structural lining (20) on the outer skin (30) by gluing, screwing and/or clipping,
- attachment of a trim (50) on the structural lining (20).
